# EUROPEAN PATENT SPECIFICATION

(11) **EP 1 470 077 B1**
(45) Date of publication and mention of the grant of the patent: **21.02.2007**
(21) Application number: 02712238.1
(22) Date of filing: 31.01.2002
(51) Int. Cl.: C01D 3/06, C01D 3/16, C01F 11/46

(54) **A PROCESS FOR RECOVERY OF LOW SODIUM SALT FROM BITTERN**
VERFAHREN ZUR GEWINNUNG VON NATRIUMARMEM SALZ AUS BITTERWÄSSERN
PROCEDE DE RECUPERATION DE SEL PAUVRE EN SODIUM, CONTENU DANS LES EAUX SALEES AMERES

(43) Date of publication of application: 27.10.2004
(73) Proprietor: COUNCIL OF SCIENTIFIC AND INDUSTRIAL RESEARCH, New Delhi 110 001 (IN)
(72) Inventor: VOHRA, Rajinder Nath, Central Salt and Marine, Bhavnagar, 364 002 Gujarat (IN); GHOSH, Pushpito Kumar, Central Salt and Marine, Bhavnagar, 364 002 Gujarat (IN); GANDHI, Maheshkumar Ramniklal, Central Salt and, Bhavvnagar, 364 002 Gujarat (IN); JOSHI, Himanshu Labhshanker, Central Salt and, Bhavnagar, 364 002 Gujarat (IN); DERIYA, Hasina Hajibhai, Central Salt and Marine, Bhavnagar, 364 002 Gujarat (IN); DAVE, Rohit Harshadray, Central Salt and Marine, Bhavnagar, 364 002 Gujarat (IN); HALDER, Koushik, Central Salt and Marine Chem., Bhavnagar, 364 002 Gujarat (IN); MAJEETHIA, Kishorkumar Manmohandas, Central Salt, Bhavnagar, 364 002 Gujarat (IN); DAGA, Sohan Lal, Central Salt and Marine Chem., Bhavnagar, 364 002 Gujarat (IN)
(74) Representative: Gaunt, Robert John
(86) International application number: PCT/IN2002/000018
(87) International publication number: WO 2003/064323

(56) References cited:
- GB-A- 1 142 901
- GB-A- 1 500 288
- US-A- 3 099 528
- US-A- 3 536 444
- PATENT ABSTRACTS OF JAPAN vol. 014, no. 171 (C-0706), 3 April 1990 (1990-04-03) & JP 02 022122 A (NAIKAI ENGIYOU KK;OTHERS: 01), 25 January 1990 (1990-01-25)

## Description

### Field of the invention

The present invention relates to a process for recovery of low sodium salt from bittern in a cost-effective manner. Low sodium salt is primarily a mixture of sodium chloride and potassium chloride and is useful for those persons who have been advised to eat less common salt because of medical conditions like hypertension.

### Background and prior art references

It is known that potassium salt-a mineral found in many fruits, vegetables and legumes such as dried peas and beans-may protect against high blood pressure. Presence of potassium in low sodium salt inhibits sodium-induced hypertension. Reference may be made to "The Heinz Handbook of Nutrition" by Benjamin T. Burton, published for H. J. Heinz Co., by McGraw Hill Book Co. Second Edition, page 132-133, wherein it is mentioned that the dietary need for potassium roughly equals that of sodium. It is also stated that muscular weakness, increased nervousness and irritability, mental disorientation and cardiac irregularities manifest potassium deficiency. Many people, especially in poorer countries, do not have access to sufficient amounts of fresh fruits and vegetables with the result that their dietary needs of potassium have to be met by alternative means.

Since salt is being taken by people almost daily and it is consumed only in very limited quantity, it is an excellent carrier for micronutrients, an important example being iodised salt. Likewise, salt can be enriched with potassium chloride to provide the essential dietary needs. As a result, low sodium salt is gaining popularity although in most cases potassium content in the salt tends to be low. This is partly because of high cost of food grade potassium chloride, increases total cost of the product (see Table 1) thereby making it unaffordable to many.

Reference may be made to Alves de Lima et al. in patent no. BR 9806380 A, 12 September 2000, entitled "Production of dietetic salt by mixing", wherein it is stated that low sodium dietetic salt is produced by mixing sea salt with potassium chloride, potassium iodate and sodium aluminium silicate, thereby mixing 4 parts of sodium chloride with 6 parts of potassium chloride. The drawback of this process is that one has to separately procure sodium chloride and potassium chloride and blend them together so as to make a solid mixture and also it is difficult to prepare a truly solid homogeneous mixture.

Reference may also be made to Shuqing Wang in patent no. CN 1271541 A, 1 November, 2000, entitled "Multi-element low-sodium nutritive salt", who disclosed the preparation of low sodium nutritive salt by crystallising salt from saturated brine under vacuum. The salt is then mixed uniformly with salts like KCl and MgSO₄.7H₂O, followed by mixing with KIO₃ and Na₂SeO₃ solutions, drying and finally mixing with active Ca and Zn lactate. The drawback of this process is that apart from the difficulty of mixing various constituents in a homogeneous solid mixture, salt is to be crystallised from hot saturated brine involving high energy consumption thereby increasing the cost of production.

### Objects of the invention

The main object of the present invention is to provide a process for recovery of low sodium salt from bittern, which obviates the drawbacks as detailed above.

Another object of the present invention is to undertake such recovery through intermediate formation of crude carnallite which is a mixture of NaCl and the double salt [KCl.MgCl₂.6H₂O ]of KCl and MgCl₂. Crude carnallite can be obtained from low sulphate-containing bittern which may, in turn, be produced from naturally occurring brines of low sulphate content or can be obtained even from high sulphate-containing bitterns such as that obtained from sea brine or sub-soil brine through the desulphatation process described in patent No. WO 03/035550.

Yet another object of the present invention is to vary the composition of crude carnallite in solar pans such that NaCl and KCl in the final composition can be varied as per requirement.

Yet another object of the present invention is to show that valuable nutrients like calcium and magnesium can be introduced into the salt directly from bittern and there is no need of external addition of these nutrients.

Yet another object of the present invention is to prepare low sodium salt under ambient conditions of processing except the final drying of product in an oven.

Yet another object of the present invention is to treat low sodium salt with suitable additives to impart free flowing properties to the salt and for iodisation of the salt by known methods.

### SUMMARY OF THE PRESENT INVENTION

The present invention relates to recovery of low sodium salt from bittern which is a by-product of salt industry. The process involves treatment of bittern with calcium chloride to precipitate calcium sulphate, solar evaporation of desulphated bittern in crystallisers to produce a solid mixture of sodium chloride and carnallite and processing the said mixture with water to produce low sodium salt. This is dried and treated with additives to give free flowing properties. In a variation of the process, brine can be desulphated prior to crystallization of common salt as described in patent No. WO 03/035550.

Accordingly the present invention provides a process for the preparation of low sodium salt which comprises (i) treatment of bittern of density 29 °Be' to 30 °Be' containing sulphate in the range of 20 to 65 g/L with calcium chloride-which is obtained from any of the sources/methods described in patent No. WO 03/035550 with concentration of calcium chloride ranging from 80 g/L to 450 g/L and in the mol ratio of 0.9 to 1.1 moles of calcium chloride to one mole of sulphate in bittern to produce calcium sulphate; (ii) separating calcium sulphate from desulphated bittern; (iii) evaporating desulphated bittern containing 90 to 135 g/L of sodium chloride and 20 to 25 g/L of potassium chloride, in solar pans till density ranging from 30 to 33.0 °Be' is reached, with deposition of excess salt, in pans; (iv) separating excess salt from concentrated bittern by decantation; (v) evaporating further this bittern in a second set of solar pans till density of 35.5 °Be' is reached, with deposition of the desired mixture of sodium chloride and carnallite (KCl.MgCl₂.6H₂O), in pans; (vi) scraping and heaping the solid mixture and draining out the mother liquor; (vii) treating solid mixture with water in the ratio of 0.3 to 0.5 parts of water with one part of solid mixture in a stirred vessel for a period in the range of 20 to 60 minutes thereby producing a solid, which is low sodium salt, and a liquid in equilibrium with this solid; (viii) separating the solid product from the liquid in a centrifuge; (ix) recycling the liquid containing dissolved magnesium chloride and 30 to 55 g/L of sodium and potassium chlorides to carnallite pans for enhanced recovery of sodium and potassium salts; (x) drying low sodium salt at a temperature ranging from 90 °C to 130 °C by known techniques; (xi) treating dried material with 25 to 50 ppm of potassium iodate and 0.01 % to 0.05 % w/w light magnesium carbonate or *in situ* generating magnesium carbonate from the reaction of sodium carbonate and residual MgCl₂ in the salt in order to make the material free flowing.

In an embodiment of the present invention bittern is treated with required quantity of calcium chloride such that the concentration of sulphate in bittern of 29-30 °Be' after treatment is reduced to the levels of 1-15 g/L to promote carnallite formation.

In yet another embodiment of the present invention desulphated bittern may be evaporated in solar pans for adequate period till density reaches to a levels in the range of 30 to 33 °Be' when excess salt is separated from concentrated bittern.

In yet another embodiment of the present invention, the desulphated bittern may be further evaporated in solar pans for adequate period till the density to a levels in the range of 34.5 °Be' to 36 °Be' is reached thereby depositing a mixture containing sodium chloride and carnallite.

In yet another embodiment of the present invention, the solid mixture is treated with 0.3-0.5 kg water/kg of crude solid mixture to decompose the carnallite and the resultant dry solid, free from liquid, is obtained by centrifugation and subsequent oven drying.

In yet another embodiment of the present invention, the solid composition of NaCl/KCl is treated by known techniques with appropriate micronutrient additives and free flow aids as required to impart the final desired characteristics to the product.

### DESCRIPTION OF THE INVENTION

Bittern, a by-product of salt industry, having a density of 29-30 °Be' is treated with calcium chloride as described in patent No. WO 03/035550.

Desulphated bittern is taken into a solar pan where it undergoes evaporation with the deposition of common salt and density of bittern is raised. The density to which bittern is required to be raised depends upon quantity of excess salt required to be removed by solar evaporation which further depends upon the desired composition of potassium chloride and sodium chloride in the final product. This composition may range from 20 % KCl to 70 % KCl which is equivalent to density of bittern in this crystalliser to be in the range from 30.5°Be' to 33°Be'. After removal of excess salt bittern is taken to carnallite crystalliser pans where mixture of carnallite (KCl.MgCl₂.6H₂O) and sodium chloride crystallises out in the density range 33 to 36°Be'.

The mixture of carnallite double salt and sodium chloride is treated with 0.3-0.5 kg water/kg of solid mixture in a stirred vessel as per known procedure to decompose the double salt and produce a solid mixture of sodium chloride and potassium chloride. The solid-liquid mixture is centrifuged and the supernatant liquid, comprising mainly MgCl₂ and some (30-55 g/L) dissolved potassium chloride and sodium chloride is recycled to the carnallite pan to recover residual quantity of potassium chloride and sodium chloride.

The solid residue obtained after centrifugation is dried in a tray drier at a temperature between 90-130 °C, treated with 0.01-0.05 % light magnesium carbonate (100-150 g/L density) and dried to make the same free flowing. If required, the low sodium salt may be iodised with aqueous KIO₃ solution (10-50 ppm I) to make it saleable as free flowing iodised low sodium salt.

In the field of chemical technology the recovery of low sodium salt from bittern, a by-product of salt industry, has assumed importance on account of its nutritive value. The process involves chemical treatment of bittern with CaCl₂-containing distiller by-product waste of soda ash industry or pure calcium chloride, to separate sulphate; concentrating bittern in solar pans to produce mixture of salt and carnallite and finally processing the mixture to produce low sodium salt. This salt is optionally made free flowing and iodised with suitable additives.

The present invention discloses the preparation of low sodium salt containing different proportions of NaCl and KCl directly from brine/bittern in solar pans and it obviates the need of any external addition of food grade KCl and other nutrients in salt. The inventive steps adopted in the present invention are: (i) realization that desulphated bittern of density 29-30 °Be' that yields a mixture of sodium chloride and carnallite upon further evaporation can be a source for recovery of low sodium salt directly, (ii) control of bittern density of desulphated bittern and charging of carnallite pan in a manner so as to adjust NaCl content in crude carnallite mixture, (iii) decomposition of the double salt in the solid mixture in a manner so as to achieve the NaCl/KCl mixture of desired ratio with highest possible yield, (iv) simple method of industrial centrifugation to yield low sodium salt composition with desired purity without any need for washing of the solid, and (v) recycling of the supernatant into carnallite pan so as to maximize yield of low sodium salt from given quantity of bittern.

The following examples are given by way of illustration and therefore should not be construed to limit the scope of the present invention.

### Example 1 (not within the scope of the invention)

In this example 35 L of bittern of subsoil source, with density 29 °Be' and having the following chemical analysis: Mg²⁺= 48.0 g/ L; Ca²⁺ = 0.5 g/L; Na⁺=37 g/L (95 g/L as NaCl); K⁺ = 11.2 g/L (21.5 g/L as KCl); Cl⁻= 191.1 g/L; SO₄²⁻ = 26.7 g/L (0.278 M) was used for the production of low sodium salt. This bittern containing 9.73 moles of SO₄²⁻ was desulphated by using 9.75 moles of Ca²⁺ [(2.46 L of calcium chloride solution (obtained by dissolution of limestone and hydrochloric acid) containing 440 g/L CaCl₂]. After removal of gypsum, desulphated bittern is evaporated to a density of 35.5 °Be'. 7 kg of crude carnallite containing a mixture of sodium chloride and carnallite was separated out. Crude carnallite had the following chemical composition: Mg²⁺ = 5.46 %; Ca²⁺ = 0.35 %; Na⁺ = 16.69 % (42.09 % as NaCl); K⁺ = 5.26 % (10.05 % as KCl); Cl⁻ = 47.49 %; SO₄²⁻=0.38 %; H₂O=24.4 %.

The total material was treated with 2.8 L of water in a stirred vessel and stirring continued for 30 min. The supernatant solution was decanted and the solid residue, weighing 2.61 kg, had the following chemical analysis after filtration: Mg²⁺ = 0.52 % ; Ca²⁺ = 0.55 %; SO₄²⁻ = 0.4%; NaCl = 76.1 %; KCl = 21.5 %.

The volume of the supernatant was 4.02 L and contained mainly MgCl₂ besides small quantities of NaCl and KCl. This liquid is evaporated to 35.5 °Be' and the carnallite obtained was processed in similar manner as above to obtain an additional 0.4 kg of low sodium salt. Overall recovery on KCl basis worked out to be nearly 87%.

### Example 2

In this example the experiment was conducted in the field using bittern of sub-soil origin and utilising solar energy for evaporation in shallow pans lined with thin gauge plastic to avoid percolation loss. 1500 L of the bittern of Example 1 having total sulphate content of 417 moles was processed for this purpose. The bittern was desulphated using sulphate equivalent of calcium chloride solution of concentration as in Example 1. After removal of gypsum, the desulphated bittern was added into solar pans and left for evaporation up to 32.5 °Be.' The bittern is allowed to evaporate further in a second pan where a mixture of carnallite and sodium chloride weighing 205 kg is deposited at a liquid density of 35.5 °Be'. This mixture had the following chemical analysis of the main components: mg²⁺= 7.81 %; Na⁺= 6.34 %; K⁺= 7.37 %; Cl⁻ = 39.38 %.

The above solid after separation from end bittern is treated with 82 L of water in a stirred vessel for one hour and centrifuged when practically the entire magnesium goes into the supernatant liquid (180 L) along with some fraction of sodium and potassium chlorides, and 55 kg of low sodium salt of following composition is obtained: Mg²⁺ = 0.57 %; Ca²⁺ = 0.35 % SO₄²⁻ = 0.25 %; NaCl = 53.58 %; KCl = 44.52 %.

The supernatant liquid is evaporated in solar pans in similar manner as in Example 1 and solid deposited is processed with water as before to recover 6.0 kg of additional low sodium salt giving a total yield of 61 kg.

### Example 3 (not within the scope of the invention)

In this example high sulphate bittern of sea water origin was used for low sodium salt preparation. Chemical analysis of this bittern is given below: Mg²⁺ = 50.45 g/ L; Ca²⁺= 0.41 g/L; Na⁺ = 37.39 g/L (95 g/L as NaCl); K⁺= 13.90 g/L (26.5 g/L as KCl); Cl⁻= 167.33 g/L; SO₄²⁻ = 66.80 g/L.

Bittern was desulphated with calcium chloride obtained as liquid distiller by-product from soda ash industry. Analysis of the liquid by-product is given below: Water = 834 g/L; Na⁺ = 26.03 g/L; Ca²⁺= 55.47g/L; Cl⁻ = 132.4 g/L ; OH⁻ = 2.8 g/L; CaCO₃ = 9.96 g/L; CaSO₄ = 2.49 g/L; MgO = 3.74 g/L. The above distiller by-product was settled to remove suspended impurities and a clear liquid supernatant was obtained containing 66 g/L and 128.7 g/L NaCl and CaCl₂, respectively.

1500 L of 29 °Be' bittern (containing a total of 1044 moles SO₄²⁻) was treated with 900 L of the settled distiller by-product (containing a total of 1044 moles CaCl₂) in a plastic-lined solar pan. Mixed liquid was allowed to evaporate in the pan, to ensure complete deposition of calcium sulphate till density of 29 °Be' was achieved again. Clear liquid from mixing pan was transferred to second pan which was also lined with plastic lining and was allowed to evaporate till liquid density of 35.5 °Be' as achieved. 300 kg of solid which was a mixture of sodium chloride and carnallite was separated from end bittern. The chemical analysis of solid mixture is given below: Mg²⁺ = 6.0 %; Ca²⁺ = 0.35 %; SO₄²⁻ = 0.4 %; Na⁺= 16.31 % (41.45 % as NaCl); K⁺ = 5.79 % (11.05 % as KCl).The solid mixture was treated with 135 L of water in a stirred vessel for one hour and centrifuged. 240 L of supernatant liquid and 120 kg of low sodium salt with the composition: Mg²⁺ = 0.3 %; Ca²⁺ = 0.4 %; NaCl = 74.3 %; KCl = 22.2 % were obtained.

### Example 4

In this example low sodium salt as produced above was treated with potassium iodate and light magnesium carbonate in order to provide free flowing properties to salt. Accordingly 60 kg of low sodium salt was first dried at 110 °C and after pulverisation was treated with 3 g of potassium iodate (in the form of a 10 % solution), followed by 12 g of light magnesium carbonate and was immediately packed tightly in bags.

**The main advantages of the present invention are:**
(1) The homogeneous mixture of sodium chloride and potassium chloride, which constitutes low sodium salt, can be produced directly from 29-30 °Be' bittern instead of producing such salt through artificial mixing of the two solids as presently undertaken.
(2) The ratio of potassium chloride and sodium chloride can be adjusted in the range from 20 % KCl to 70 % KCl according to customer requirements by varying the baume density at which the carnallite crystalliser pan is charged.
(3) The process involves no heating or cooling except final drying of product in an oven and the production of crude carnallite is carried out under ambient conditions with the help of solar energy while subsequent processing of the carnallite for recovery of low sodium salt is also carried out under ambient conditions.
(4) Other nutrients like calcium and magnesium which are beneficial in small amounts are drawn from bittern itself and need not be added from outside.
(5) The supernatant liquor remaining after formation of low sodium salt can be recycled in the carnallite pan to boost yield of the process.
(6) A variety of calcium ion-containing raw material can be used for the desulphatation of bittern required for carnallite production when the bittern contains high levels of sulphate.
(7) Compared to the high cost of production of low sodium salt by conventional route as shown in Table 1, the low sodium salt can be produced at considerably lower cost by the method of the present invention, especially when produced from sub-soil bittern as illustrated in Table 2 and/or when distiller by-product of soda ash industry, after clarification, is used as calcium chloride source which would greatly reduce the calcium chloride raw material cost in Table 2 and/or when low sodium salt is produced by salt manufacturers who would have bittern available at no cost since it is mostly being discharged as waste.

**Table 1**

| **ESTIMATED COST OF PRODUCTION FOR 3000 TONS/ANNUM LOW SODIUM SALT BYCONVENTIONAL PROCESS OF MIXING NaCl and KCl (55% NaCl; 45 % KCL)** | | | |
|---|---|---|---|
| **Raw Material** | **Quantity Required/t on** | **Rate in Indian Rupees/ton** | **Annual cost in Rupees/M** |
| Sodium Chloride | 1650 | 1,000 | 1.65 |
| Potassium Chloride (Food grade) | 1350 | 20,000 | 27.00 |
| **Other costs** | | 1,000 | 3.00 |
| (including cost of mixing, depreciation on machinery, etc) | | | 31.65 |
| Total cost for 3000 tons | | | |
| Cost of production per ton | | | Rs.10,550 |

**Table 2**

| **ESTIMATED COST OF PRODUCTION FOR 3000 TONS/ANNUM LOW SODIUM SALT (55 % NaCl; 45 % KCL) FROM SUB-SOIL AND SEA BITTERNS UNDER INDIAN CONDITIONS** | | | | |
|---|---|---|---|---|
| **Raw Material** | | Quantity required | Rate | Cost in Rs./M |
| Bittern | | 80,000 M³ | - | 2.4 |
| Calcium chloride | | 2400 tons (sub-soil bittern) | 3500/ton | 8.40 |
| (on CaCl₂.2H₂O basis) | | 6000 tons (sea bittern) | " | 21.00 |
| **Utilities** | | | | |
| Power | | 3,55,200 KWH | @ Rs. 4/-KWH | 1.42 |
| LDO for drying | | 12,223 L | @ Rs.18/L | 0.22 |
| Water | | 8,000 m³ | @ Rs.20/m³ | 0.16 |
| Field Labour | | 5,500 mandays | @ Rs. 75/ manday | 0.42 |
| Supervisory Staff | | | | 0.30 |
| **Other costs** | | | | |
| Depreciation on plant and machinery (Without liner) | | | | 0.35 |
| Repair/replacement cost of liner for carnallite pan (assuming the life of liner to be 2years) | | | | 0.75 |
| Interest on capital investment | | | @ 12% per annum | 0.66 |
| **Total cost (Rs/M) (Sub-soil bittern)** | | | | 15.08 |
| | **(Sea bittern)** | | | 27.68 |
| **Cost of Low Sodium Salt per ton** | | | | (in Rupees) |
| | From Sub-soil bittern | | | 5027 |
| | From Sea bittern | | | 9227 |

## Claims

1. An economical process for recovery of low-sodium salt, preparing free flowing low-sodium salt or optionally preparing iodized low sodium salt and with enhanced recovery of low sodium salt from bittern, the said process comprising steps of:
a) treating the bittern having a density of from 29 to 30° Be with calcium chloride solution to produce insoluble calcium sulfate,
b) separating calcium sulfate of step (a) to obtain desulphated bittern,
c) evaporating the desulphated bittern of step (b) in solar pans with deposition of excess salt in pans,
d) removing the excess salt deposit of step (c) to obtain concentrated desulphated bittern of density ranging from 30 to 33° Be,
e) feeding the concentrated desulphated bittern of step (d) to a carnallite pans and continuing the solar evaporation to achieve a density of about 35.5° Be wherein solid deposition is initiated,
f) separating the solid mixture of step (e) constituting a mixture of sodium chloride and carnallite (KCl.MgCl₂.6H₂O) from end bittern,
g) treating with stirring the solid mixture of step (f) with water over a period of 20-60 minutes to produce desired sodium salt composition and a liquid in equilibrium with this solid containing mainly magnesium chloride with dissolved sodium chloride and potassium chloride,
h) separating the solid product of step (g) from the liquid by centrifugation, and
i) drying the solid of step (h) at a temperature ranging from 90° - 130° C to obtain low sodium salt

2. A process as claimed in claim 1, wherein the low-sodium salt of step (i) is treated with an additive to obtain free flowing low sodium salt.

3. A process as claimed in claim 1, wherein the low-sodium salt of step (i) is treated with an alkali iodate salt to obtain iodized low sodium salt.

4. A process as claimed in claim 1, wherein recovery of low-sodium salt can be enhanced by recycling the bittern of step (h).

5. A process as claimed in claim 1, wherein the low sodium salt is produced directly from bittern containing sodium chloride, potassium chloride and Mg²⁺.

6. A process as claimed in claim 1, wherein the source for bittern is from seawater or sub soil origin and preferably bittern having low sulphate content.

7. A process as claimed in claim 1, wherein in step (a) the concentration of calcium chloride solution used is in the range of 80 to 450 g/liter.

8. A process as claimed in claim 1, wherein in step (a) the source of calcium chloride is from distiller by product waste of soda ash industry.

9. A process as claimed in claim 1, wherein in step (b) the desulphated bittern has a concentration of sodium chloride 90 - 135 g/liter and potassium chloride 20-25 g/liter.

10. A process as claimed in claim 1, wherein in step (c) the potassium chloride and sodium chloride can be adjusted in the range of 20% KCl to 70% KCl by varying between 30 to 33° Be the density of desulphated bittern.

11. A process as claimed in claim 1, wherein in step (g) the ratio of water to the solid mixture ranges from 0.30-0.50 to 1.00.

12. A process as claimed in claim 1, wherein steps (a to h) are carried out at an ambient temperature and step (i) is carried out at a temperature range of 90° - 130°C.

13. A process as claimed in claim 2, wherein the additive used is light magnesium carbonate at a concentration range of 0.01 - 0.05% w/w with respect to low-sodium salt.

14. A process as claimed in claim 3, wherein the alkali salt used is potassium iodate at a concentration range of 10-50 ppm with respect to low sodium salt.

15. A process as claimed in claim 1, wherein the supernatant liquor of step (h) remaining after decomposing of crude carnallite of step (f) can be recycled in carnallite pan to increase yield of the process to 87-90% based on potassium content of the bittern used.

16. A process as claimed in claim 1, wherein each nutrient calcium and magnesium ranging in the amount 0.01 to 2.0% is drawn from the bittern used and is not externally added.

17. A process as claimed in claim 1, wherein the isolated yield of low sodium salt from bittern is in the range of 0.03 kg/liter to 0.07 kg/liter.

18. A process as claimed in claim 4, wherein the isolated yield of low sodium salt from bittern after adopting recycling process is in the range of 0.04 kg/liter to 0.09 kg/liter.

## Patentansprüche

1. Wirtschaftliches Verfahren zur Gewinnung von natriumarmem Salz, zum Herstellen von frei fließendem natriumarmem Salz oder zum optionalen Herstellen von jodiertem natriumarmem Salz und mit verbesserter Gewinnung von natriumarmem Salz aus Bitterwässern, wobei das Verfahren die folgenden Schritte umfasst:
a) Behandeln des Bitterwassers, das eine Dichte von 29 bis 30° Be aufweist, mit Calciumchloridlösung, um unlösliches Calciumsulfat herzustellen,
b) Abtrennen des Calciumsulfats aus Schritt (a), um entsulfatisiertes Bitterwasser zu erhalten;
c) Eindampfen des entsulfatisierten Bitterwassers aus Schritt (b) in Solarpfannen mit der Ablagerung von überschüssigem Salz in Pfannen,
d) Entfernen der überschüssigen Salzablagerung aus Schritt (c), um konzentriertes entsulfatisiertes Bitterwasser einer Konzentration im Bereich von 30 bis 33° Be zu erhalten,
e) Zuführen des konzentrierten entsulfatisierten Bitterwassers aus Schritt (d) in Karnallitpfannen und Fortsetzen der Solareindampfung, um eine Dichte von ungefähr 35,5° Be zu erreichen, wobei Feststoffablagerung eingeleitet wird,
f) Trennen der Feststoffmischung aus Schritt (e), die eine Mischung aus Natriumchlorid und Karnallit (KClMgCl₂·H2O) darstellt, aus dem Endbitterwasser,
g) Behandeln der Flüssigmischung aus Schritt (f) mittels Rühren mit Wasser über einen Zeitraum von 20 bis 60 Minuten, um die gewünschte Natriumsalzzusammensetzung und eine Flüssigkeit im Gleichgewicht mit diesem Feststoff, der im wesentlichen Magnesiumchlorid mit gelöstem Natriumchlorid und Kaliumchlorid enthält, herzustellen,
h) Trennen des Feststoffprodukts aus Schritt (g) von der Flüssigkeit durch Zentrifugieren, und
i) Trocknen des Feststoffes aus Schritt (h) bei einer Temperatur in einem Bereich von 90° bis 130°C, um natriumarmes Salz zu erhalten.

2. Verfahren nach Anspruch 1, wobei das natriumarme Salz aus Schritt (i) mit einem Additiv behandelt wird, um frei fließendes natriumarmes Salz zu erhalten.

3. Verfahren nach Anspruch 1, wobei das natriumarme Salz aus Schritt (i) mit einem Alkalijodatsalz behandelt wird, um jodiertes natriumarmes Salz zu erhalten.

4. Verfahren nach Anspruch 1, wobei die Gewinnung von natriumarmem Salz durch Wiederaufbereiten des Bitterwassers aus Schritt (h) verstärkt werden kann.

5. Verfahren nach Anspruch 1, wobei das natriumarme Salz direkt aus Bitterwasser, das Natriumchlorid, Kaliumchlorid und Mg²⁺ enthält, hergestellt wird.

6. Verfahren nach Anspruch 1, wobei die Quelle für Bitterwasser Meerwasser oder Wasser unterirdischer Herkunft ist und das Bitterwasser vorzugsweise einen geringen Sulfatgehalt aufweist.

7. Verfahren nach Anspruch 1, wobei in Schritt (a) die Konzentration der verwendeten Calciumchloridlösung im Bereich von 80 bis 450 g/Liter liegt.

8. Verfahren nach Anspruch 1, wobei die Quelle des Calciumchlorids in Schritt (a) Produktabfall der Rohsodaindustrie aus einem Destillationsgerät ist.

9. Verfahren nach Anspruch 1, wobei das entsulfatisierte Bitterwasser in Schritt (b) eine Natriumchloridkonzentration von 90 bis 135 g/Liter und eine Kaliumchloridkonzentration von 20 bis 25 g/Liter aufweist.

10. Verfahren nach Anspruch 1, wobei in Schritt (c) das Kaliumchlorid und das Natriumchlorid im Bereich von 20% KCl bis 70% KCl durch Variieren der Dichte des entsulfatisierten Bitterwassers zwischen 30 bis 33° Be angepasst werden kann.

11. Verfahren nach Anspruch 1, wobei in Schritt (g) das Verhältnis von Wasser zur Feststoffmischung im Bereich von 0,30-0,50 bis 1,00 liegt.

12. Verfahren nach Anspruch 1, wobei die Schritte (a bis h) in Umgebungstemperatur und Schritt (i) in einem Temperaturbereich von 90° bis 130°C durchgeführt werden.

13. Verfahren nach Anspruch 2, wobei das Additiv leichtes Magnesiumcarbonat in einem Konzentrationsbereich von 0,01 - 0,05 Gew.-% in Bezug auf das natriumarme Salz ist.

14. Verfahren nach Anspruch 3, wobei das Alkalisalz Kaliumjodat in einem Konzentrationsbereich von 10-50 ppm in Bezug auf das natriumarme Salz ist.

15. Verfahren nach Anspruch 1, wobei die überstehende Flüssigkeit von Schritt (h), die nach dem Zersetzen des rohen Karnallits aus Schritt (f) zurückbleibt, in der Kamallitpfanne zurückgewonnen werden kann, um die Ausbeute des Verfahrens auf 87-90%, basierend auf dem Kaliumgehalt des verwendeten Bitterwassers, erhöht werden kann.

16. Verfahren nach Anspruch 1, wobei jeder Nährstoff Calcium und Magnesium im Bereich der Menge 0,01 bis 2,0% aus dem verwendeten Bitterwasser gezogen und nicht extern hinzugefügt wird.

17. Verfahren nach Anspruch 1, wobei die isolierte Ausbeute an natriumarmem Salz aus Bitterwasser im Bereich von 0,03 kg/Liter bis 0,07 kg/Liter liegt.

18. Verfahren nach Anspruch 4, wobei die isolierte Ausbeute an natriumarmem Salz aus Bitterwasser nach Anwendung des Wiedergewinnungsvorgangs im Bereich von 0,04 kg/Liter bis 0,09 kg/Liter liegt.

## Revendications

1. Procédé économique permettant de récupérer un sel pauvre en sodium, préparant un sel fluide pauvre en sodium ou facultativement préparant un sel iodé pauvre en sodium et avec une récupération améliorée de sel pauvre en sodium à partir d'une eau mère, ledit procédé comprenant les étapes consistant à :
a) traiter l'eau mère ayant une densité de 29 à 30 °Be avec une solution de chlorure de calcium pour produire un sulfate de calcium insoluble,
b) séparer le sulfate de calcium de l'étape (a) pour obtenir une eau mère désulfatée,
c) évaporer l'eau mère désulfatée de l'étape (b) dans des bacs solaires avec le dépôt de sel en excès dans les bacs,
d) retirer le dépôt de sel en excès de l'étape (c) pour obtenir une eau mère concentrée désulfatée d'une densité allant de 30 à 33 °Be,
e) introduire l'eau mère concentrée désulfatée de l'étape (d) dans des bacs à carnallite et poursuivre l'évaporation solaire pour obtenir une densité d'environ 35,5 °Be où un dépôt solide est initié,
f) séparer le mélange solide de l'étape (e) composé d'un mélange de chlorure de sodium et de carnallite (KCl.MgCl₂.6H₂O) de l'eau mère finale,
g) traiter sous agitation le mélange solide de l'étape (f) avec de l'eau pendant 20 à 60 minutes pour produire la composition de sel de sodium souhaitée et un liquide en équilibre avec ce solide contenant principalement du chlorure de magnésium avec du chlorure de sodium et du chlorure de potassium dissous,
h) séparer le produit solide de l'étape (g) du liquide par centrifugation, et
i) sécher le solide de l'étape (h) à une température allant de 90° à 130°C pour obtenir un sel pauvre en sodium.

2. Procédé selon la revendication 1, dans lequel le sel pauvre en sodium de l'étape (i) est traité avec un additif pour obtenir un sel fluide pauvre en sodium.

3. Procédé selon la revendication 1, dans lequel le sel pauvre en sodium de l'étape (i) est traité avec un sel d'iodate alcalin pour obtenir un sel iodé pauvre en sodium.

4. Procédé selon la revendication 1, dans lequel la récupération d'un sel pauvre en sodium peut être améliorée en recyclant l'eau mère de l'étape (h).

5. Procédé selon la revendication 1, dans lequel le sel pauvre en sodium est directement produit à partir d'une eau mère contenant du chlorure de sodium, du chlorure de potassium et du Mg²⁺.

6. Procédé selon la revendication 1, dans lequel la source d'eau mère provient de l'eau de mer ou est d'origine souterraine, et de préférence l'eau mère ayant une teneur faible en sulfate.

7. Procédé selon la revendication 1, dans lequel dans l'étape (a), la concentration de la solution de chlorure de calcium utilisée va de 80 à 450 g/litre.

8. Procédé selon la revendication 1, dans lequel dans l'étape (a), la source de chlorure de calcium provient de déchets de distillateur de l'industrie du carbonate de sodium.

9. Procédé selon la revendication 1, dans lequel dans l'étape (b), l'eau mère désulfatée possède une concentration en chlorure de sodium allant de 90 à 135 g/litre et en chlorure de potassium allant de 20 à 25 g/litre.

10. Procédé selon la revendication 1, dans lequel dans l'étape (c), le chlorure de potassium et le chlorure de sodium peuvent être ajustés dans la plage de 20 % de KC1 à 70 % de KC1 en faisant varier la densité de l'eau mère désulfatée entre 30 et 33 °Be.

11. Procédé selon la revendication 1, dans lequel dans l'étape (g) le rapport de l'eau au mélange solide va de 0,30-0,50 à 1,00.

12. Procédé selon la revendication 1, dans lequel les étapes (a à h) sont réalisées à température ambiante et l'étape (i) est réalisée dans une plage de température allant de 90° à 130°C.

13. Procédé selon la revendication 2, dans lequel l'additif utilisé est le carbonate de magnésium léger à une concentration de 0,01 à 0,05 % en poids par rapport au sel pauvre en sodium.

14. Procédé selon la revendication 3, dans lequel, le sel alcalin utilisé est l'iodate de potassium à une concentration de 10 à 50 ppm par rapport au sel pauvre en sodium.

15. Procédé selon la revendication 1, dans lequel, la liqueur surnageante de l'étape (h) restant après la décomposition de la carnallite brute de l'étape (f) peut être recyclée dans un bac à carnallite pour augmenter le rendement du procédé jusqu'à 87-90 % en se basant sur la teneur en potassium de l'eau mère utilisée.

16. Procédé selon la revendication 1, dans lequel chacune des substances nutritives parmi le calcium et le magnésium en une quantité allant de 0,01 à 2,0 % est retirée de l'eau mère utilisée et n'est pas ajoutée de l'extérieur.

17. Procédé selon la revendication 1, dans lequel le rendement isolé en sel pauvre en sodium à partir d'une eau mère va de 0,03 kg/litre à 0,07 kg/litre.

18. Procédé selon la revendication 4, dans lequel le rendement isolé en sel pauvre en sodium à partir d'une eau mère après avoir adopté le procédé de recyclage va de 0,04 kg/litre à 0,09 kg/litre.
